(19) **Europäisches Patentamt / European Patent Office / Office européen des brevets**

(11) **EP 2 395 436 A1**

(12) **EUROPÄISCHE PATENTANMELDUNG**

(43) Veröffentlichungstag:
**14.12.2011 Patentblatt 2011/50**

(51) Int Cl.:
***G06F 17/13*** *(2006.01)*

(21) Anmeldenummer: **10006029.2**

(22) Anmeldetag: **10.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **SIEMENS AKTIENGESELLSCHAFT**
**80333 München (DE)**

(72) Erfinder:
• **Gilg, Albert, Professor**
 **86916 Kaufering (DE)**
• **Paffrath, Meinhard, Dr.**
 **85622 Feldkirchen (DE)**
• **Wever, Utz, Dr.**
 **81539 München (DE)**

(54) **Vorrichtung und Verfahren zum automatischen Generieren eines deterministischen Ziel-Differentialgleichungssystems**

(57)      Vorrichtung und Verfahren zum automatischen Generieren eines deterministischen Ziel-Differentialgleichungssystems zur Auswertung eines Ausgangs-Differentialgleichungssystems mit stochastischen Eingangsparametern (K) mit einer Einrichtung (3, 5) zum Bereitstellen einer gewichteten Summe von orthogonalen Basisfunktionen $\Psi(\theta)$, die in das Ausgangs-Differentialgleichungssystem eingesetzt wird, wobei $(\theta)$ eine stochastische Zufallsgröße bildet. Es ist eine Multiplikationseinrichtung (6) zum Multiplizieren des Ausgangs-Differentialgleichungssystems mit den bereitgestellten orthogonalen Basisfunktionen $\Psi(\theta)$ und eine Integrationseinrichtung (7) zum Integrieren des mit den orthogonalen Basisfunktionen $\Psi(\theta)$ multiplizierten Ausgangs-Differentialgleichungssystems zur Generierung des deterministischen Ziel-Differentialgleichungssystems vorgesehen. Eine Steuereinrichtung (9), berechnet stochastische Ausgangsparameter auf Grundlage des generierten deterministischen Ziel-Differentialgleichungssystems und steuert ein mechanisches oder elektronisches Einstellglied (10) entsprechend. Die erfindungsgemäße Vorrichtung eignet sich für den Einsatz in einer robusten Regelungs- und Steuerschaltung zur Regelung einer Anlage, insbesondere einer chemischen Reaktionsanlage, beispielsweise zur Minimierung schädlicher Abgasstoffe.

FIG 2

EP 2 395 436 A1

**Beschreibung**

Die Erfindung betrifft eine Vorrichtung und Verfahren zum automatischen Generieren eines deterministischen Ziel-Differentialgleichungssystems für die Auswertung eines Ausgangs-Differentialgleichungssystems mit stochastischen Eingangsparametern (RDE: Random Differential Equation, insbesondere RODE: Random Ordinary Differential Equation, RPDE: Random Partial Differential Equations, RDDE: Random Delay Differential Equations) und insbesondere eine robuste Regelungs- oder Steuerungsschaltung mit einer Steuereinrichtung, die in Abhängigkeit des generierten deterministischen Ziel-Differentialgleichungssystems stochastische Eingangsparameter eines durch das Ausgangs-Differentialgleichungssystems modellierten technischen Systems optimal einstellt.

Viele technische Prozesse und Systeme können durch Differentialgleichungen DGL beschrieben werden. Beispielsweise können chemische Prozesse, insbesondere Verbrennungsprozesse, Mehrkörpersysteme oder Transportsysteme mittels einer oder mehrerer Differentialgleichungen modelliert werden. Mehrkörpersysteme umfassen beispielsweise Automobile, Roboter oder Maschinenwerkzeuge. Auch elektrische Schaltkreise, beispielsweise Oszillatoren oder digitale Schaltkreise, lassen sich mit Hilfe von Differentialgleichungen beschreiben beziehungsweise modellieren. Weitere Beispiele sind Transport- und Diffusionsprozesse bei Fluiden bzw. Gasen oder Alterungsprozesse, beispielsweise radioaktiver Verfall oder Wachstum einer Population, beispielsweise von Mikroorganismen oder dergleichen.

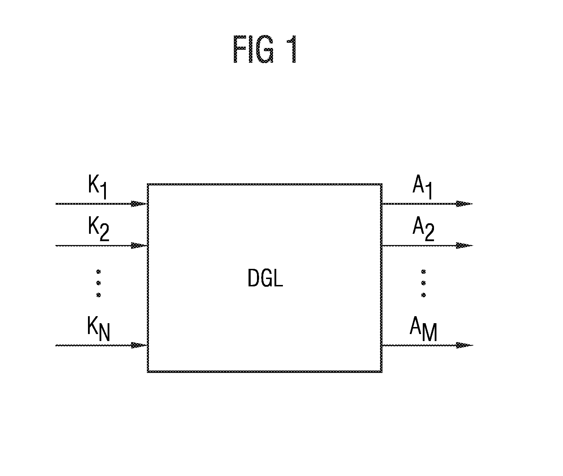

Figur 1 zeigt schematisch ein technisches System, das mit Eingangsparametern K beaufschlagt wird und Ausgangsparameter A liefert. Das technische System wird mittels Differentialgleichungen DGL modelliert bzw. beschrieben. In vielen technischen Systemen sind die Eingangsparameter K stochastische Parameter bzw. streuende Parameter. Ein Beispiel für streuende Eingangsdaten bzw. Eingangsparameter ist die Umgebungstemperatur bei einem chemischen System zur Herstellung bzw. Umwandlung chemischer Produkte. Weiterhin können Messdaten, die beispielsweise von Messsensoren geliefert werden, die eine stochastische Verteilung aufweisen. Ferner kann beispielsweise die Geometrie eines Mehrkörpersystems aufgrund von Herstellungstoleranzen streuen bzw. von einem Normwert abweichen. Allgemein bilden Herstellungstoleranzen von in einem System vorgesehenen Bauelementen eine mögliche Quelle für eine Streuung von Eingangsparametern K. Abweichungen der stochastischen Eingangsparameter führen zu einer Unsicherheit bei den Ausgangsparametern A des Systems.

Bei einem System kann es sich zum Beispiel um ein Simulationsmodell eines realen technischen Systems handeln, welches mittels einer oder mehr Differentialgleichungen beschrieben ist. Ein typisches Beispiel ist ein Klimamodell mit dessen Hilfe ein zukünftiger Temperaturverlauf T(t) in Abhängigkeit stochastischer Eingangsparameter K für einen zukünftigen Zeitraum ∆T vorhergesagt wird. Bei diesem Simulationsmodell stellt der zukünftige Temperaturverlauf T(t) einen Ausgangsparameter A(t) dar, der in Abhängigkeit von stochastischen Eingangsparametern K ermittelt wird. Die stochastischen Eingangsparameter K sind beispielsweise die von einem oder mehreren Messfühlern gemessenen Luftdrücke an verschiedenen Orten. Die gemessenen stochastischen Eingangsparameter K streuen innerhalb eines gewissen Bereichs, beispielsweise aufgrund der Herstellungstoleranzen der verschiedenen Messfühler. Die verschiedenen Unsicherheiten der verschiedenen stochastischen Eingangsparameter K pflanzen sich bei der Berechnung des Ausgangsparameters A(t), beispielsweise des vorhergesagten Temperaturverlaufs T(t) fort, so dass eine Temperaturvorhersage umso ungenauer wird je weiter der berechnete Temperaturwert in der Zukunft liegt.

Bei herkömmlichen Simulationsverfahren werden derartige Unsicherheiten, beispielsweise Streuungen aufgrund von Herstellungstoleranzen, durch eine so genannte Monte-Carlo-Auswertung berücksichtigt. Dabei wird ein Zufallszahlenensemble generiert, das eine Wahrscheinlichkeitsverteilung widerspiegelt, und das bestehende Differentialgleichungssystem wird mit den entsprechenden generierten Werten durchgerechnet. Dieses herkömmliche Verfahren liefert die Momente der Trajektorie an der vorgesehenen Endzeit. Diese herkömmliche Vorgehensweise führt zu einem ganz erheblichen Rechenaufwand, insbesondere bei einem komplexen technischen System, das ein komplexes Differentialgleichungssystem mit einer Vielzahl von Differentialgleichungen und mit einer Vielzahl von Eingangsparametern K aufweist. Beispielsweise benötigt man bei einer derartigen herkömmlichen Monte Carlo Auswertung eines Ausgangs-Differentialgleichungssystems zum Teil mehrere Monate bis ein bestimmter Ausgangsparameter ∆ in seinem zeitlichen Verlauf berechnet werden kann. Ein Mikrocomputer, der die Berechnung eines Ausgangsparameters durchführt, kann einige tausend Auswertungen benötigen bis eine ausreichende Konvergenz auftritt.

Ein derartig hoher Berechnungsaufwand und die damit verbundene lange Berechnungsdauer bei der Auswertung eines Ausgangs-Differentialgleichungssystems mit stochastischen Eingangsparametern erlaubt keinen Einsatz in einer entsprechenden Steuerung oder Regelung der Eingangsparameter, insbesondere bei einer technischen Anlage, bei der Eingangsparameter in Echtzeit eingestellt werden müssen.

Es ist daher eine Aufgabe der vorliegenden Erfindung ein Verfahren und eine Vorrichtung zum automatischen Generieren eines deterministischen Ziel-Differentialgleichungssystems zu schaffen bei welchem der Berechnungsaufwand und die damit verbundene Berechnungszeit minimal ist und die den Einsatz des generierten deterministischen Ziel-Differentialgleichungssystems in einer robusten Regelungs- oder Steuerungsschaltung für die Einstellung von Eingangsparametern erlaubt.

Diese Aufgabe wird erfindungsgemäß durch ein Verfahren mit den in Patentanspruch 1 angegebenen Merkmalen gelöst.

Die Erfindung schafft ein Verfahren zum automatischen Generieren eines deterministischen Ziel- Differentialgleichungssystems zur Auswertung eines Ausgangs-Differentialgleichungssystem mit stochastischen Eingangsparametern mit den Schritten:

Bereitstellen einer gewichteten Summe von orthogonalen Basisfunktionen $\psi(\theta)$, die in das Ausgangs-Differentialgleichungssystem eingesetzt werden, wobei $(\theta)$ eine stochastische Zufallsgröße bildet;

Multiplizieren des Ausgangs-Differentialgleichungssystems mit den bereitgestellten orthogonalen Basisfunktionen $\psi(\theta)$;

Integrieren des mit den orthogonalen Basisfunktionen $\psi(\theta)$ multiplizierten Ausgangs-Differentialgleichungssystem zur Generierung des deterministischen Ziel-Differentialgleichungssystems; und

Berechnen von stochastischen Ausgangsparametern auf Grundlage des generierten deterministischen Ziel-Differentialgleichungssystems.

Das erfindungsgemäße Verfahren wird vorzugsweise durch einen oder mehrere Mikroprozessoren durch Ausführung eines Steuerprogramms in Echtzeit implementiert.

Bei einer Ausführungsform des erfindungsgemäßen Verfahrens werden die berechneten stochastischen Ausgangsparameter jeweils zur Ermittlung eines Erwartungswertes, einer Varianz und einer Verteilungsdichte des jeweiligen stochastischen Ausgangsparameters ausgewertet.

Bei einer Ausführungsform des erfindungsgemäßen Verfahrens wird der ermittelte Erwartungswert des jeweiligen stochastischen Ausgangsparameters hinsichtlich der stochastischen Eingangsparameter deterministisch optimiert und die Eingangsparameter entsprechend der zu dem optimalen Ausgangsparameter zugehörigen Eingangsparameterwerte automatisch eingestellt.

Bei einer möglichen Ausführungsform des erfindungsgemäßen Verfahrens wird das Ausgangs-Differentialgleichungssystem aus einem Speicher ausgelesen und umfasst mehrere Differentialgleichungen, die gewöhnliche Differentialgleichungen und partielle Differentialgleichungen aufweisen.

Bei einer Ausführungsform des erfindungsgemäßen Verfahrens weisen die stochastischen Eingangsparameter jeweils eine zugehörige Wahrscheinlichkeitsverteilung hinsichtlich einer stochastischen Zufallsgröße auf.

Bei einer Ausführungsform des erfindungsgemäßen Verfahrens wird die Wahrscheinlichkeitsverteilung eines stochastischen Eingangsparameters anhand von Messungen des jeweiligen stochastischen Eingangsparameters ermittelt.

Bei einer Ausführungsform des erfindungsgemäßen Verfahrens sind die orthogonalen Basisfunktionen bezüglich der Verteilung der Zufallsgröße orthogonal.

Bei einer Ausführungsform des erfindungsgemäßen Verfahrens wird die Wahrscheinlichkeitsverteilung der Zufallsgröße durch eine Normalverteilung gebildet.

Bei einer weiteren möglichen Ausführungsform des erfindungsgemäßen Verfahrens wird die Wahrscheinlichkeitsverteilung der Zufallsgröße durch eine Beta-Verteilung gebildet.

Bei einer weiteren möglichen Ausführungsform des erfindungsgemäßen Verfahrens wird die Wahrscheinlichkeitsverteilung durch eine Gleichverteilung gebildet.

Bei einer möglichen Ausführungsform des erfindungsgemäßen Verfahrens wird bei einer Normalverteilung der Zufallsgröße eine Hermite-Basisfunktion als orthogonale Basisfunktion bereitgestellt.

In einer weiteren Ausführungsform des erfindungsgemäßen Verfahrens wird bei einer Beta-Verteilung der Zufallsgröße eine Jacobi Basisfunktion als orthogonale Basisfunktion bereitgestellt.

Bei einer weiteren Ausführungsform des erfindungsgemäßen Verfahrens wird bei einer Gleichverteilung der Zufallsgröße eine Legendre-Basisfunktion als orthogonale Basisfunktion bereitgestellt.

Bei einer möglichen Ausführungsform des erfindungsgemäßen Verfahrens wird die orthogonale Basisfunktion in Abhängigkeit der ermittelten Wahrscheinlichkeitsdichteverteilung der Zufallsgröße selektiert.

Bei einer möglichen Ausführungsform des erfindungsgemäßen Verfahrens wird die selektierte orthogonale Basisfunktion aus einem Basisfunktionsspeicher ausgelesen.

Die Erfindung schafft ferner eine Vorrichtung zum automatischen Generieren eines deterministischen Ziel-Differentialgleichungssystems nach den in Patentanspruch 14 angegebenen Merkmalen.

Die Erfindung schafft eine Vorrichtung zum automatischen Generieren eines deterministischen Ziel-Differentialgleichungssystems zur Auswertung eines Ausgangs-Differentialgleichungssystems mit stochastischen Eingangsparametern mit

einer Einrichtung zum Bereitstellen einer gewichteten Summe von orthogonalen Basisfunktionen $\psi(\theta)$, die in das Aus-

gangs-Differentialgleichungssystem eingesetzt wird, wobei ($\theta$) eine stochastische Zufallsgröße bildet,

einer Multiplikationseinrichtung zum Multiplizieren des Ausgangs-Differentialgleichungssystems mit den bereitgestellten orthogonalen Basisfunktionen $\Psi(\theta)$;

eine Integrationseinrichtung zum Integrieren des mit den orthogonalen Basisfunktionen $\Psi(\theta)$ multiplizierten Ausgangs-Differentialgleichungssystems zur Generierung des deterministischen Ziel-Differentialgleichungssystems; und

mit einer Steuereinrichtung, welche stochastische Ausgangsparameter auf Grundlage des generierten deterministischen Ziel-Differentialgleichungssystems berechnet.

Die Erfindung schafft ferner eine robuste Regelungs- oder Steuerungsschaltung mit einer Vorrichtung zum automatischen Generieren eines deterministischen Ziel-Differentialgleichungssystems zur Auswertung eines Ausgangs-Differentialgleichungssystems mit stochastischen Eingangsparametern mit:

einer Einrichtung zum Bereitstellen einer gewichteten Summe von orthogonalen Basisfunktionen $\Psi(\theta)$, die in das Ausgangs-Differentialgleichungssystem eingesetzt wird, wobei ($\theta$) eine stochastische Zufallsgröße bildet,

einer Multiplikationseinrichtung zum Multiplizieren des Ausgangs-Differentialgleichungssystems mit den bereitgestellten orthogonalen Basisfunktionen $\Psi(\theta)$;

einer Integrationseinrichtung zum Integrieren des mit den orthogonalen Basisfunktionen $\Psi(\theta)$ multiplizierten Ausgangs-Differentialgleichungssystems zur Generierung des deterministischen Ziel-Differentialgleichungssystems; und

mit einer Steuereinrichtung, welche stochastische Ausgangsparameter auf Grundlage des generierten deterministischen Ziel-Differentialgleichungssystems berechnet,

Bei einer Ausführungsform der Regelungs- bzw. Steuerschaltung werden die berechneten stochastischen Ausgangsparameter durch die Steuereinrichtung jeweils zur Ermittlung eines zugehörigen Erwartungswertes des Ausgangsparameters ausgewertet, welcher hinsichtlich des stochastischen Eingangsparameters deterministisch optimiert wird.

Bei einer Ausführungsform der Regelungs- bzw. Steuerschaltung wird ein Einstellglied entsprechend des optimierten Wertes des jeweiligen Eingangsparameters durch die Steuereinrichtung angesteuert.

Weiterhin werden Ausführungsformen der erfindungsgemäßen Vorrichtung und des erfindungsgemäßen Verfahrens zum automatischen Generieren eines deterministischen Ziel-Differentialgleichungssystems zur Auswertung eines Ausgangs-Differentialgleichungssystems mit stochastischen Eingangsparametern und eine entsprechende Steuer- bzw. Regelungsschaltung unter Bezugnahme auf die beigefügten Figuren beschrieben.

Es zeigen:

Figur 1    ein Diagramm zur Verdeutlichung des der Erfindung zugrunde liegenden technischen Problems;

Figur 2    ein Blockschaltbild zur Darstellung einer möglichen Ausführungsform der erfindungsgemäßen Vorrichtung zum automatischen Generieren eines deterministischen Ziel-Differentialgleichungssystems;

Figur 3    ein Ablaufdiagramm zur Darstellung eines möglichen Ausführungsbeispiels des erfindungsgemäßen Verfah- ren zum automatischen Generieren eines deterministischen Ziel-Differentialgleichungssystems;

Figuren 4a, 4b    Diagramme zur Verdeutlichung der Funktionsweise der erfindungsgemäßen Regelungs- und Steuerungsschaltung im Vergleich zu einer herkömmlichen Regelungs- und Steuerungsschaltung.

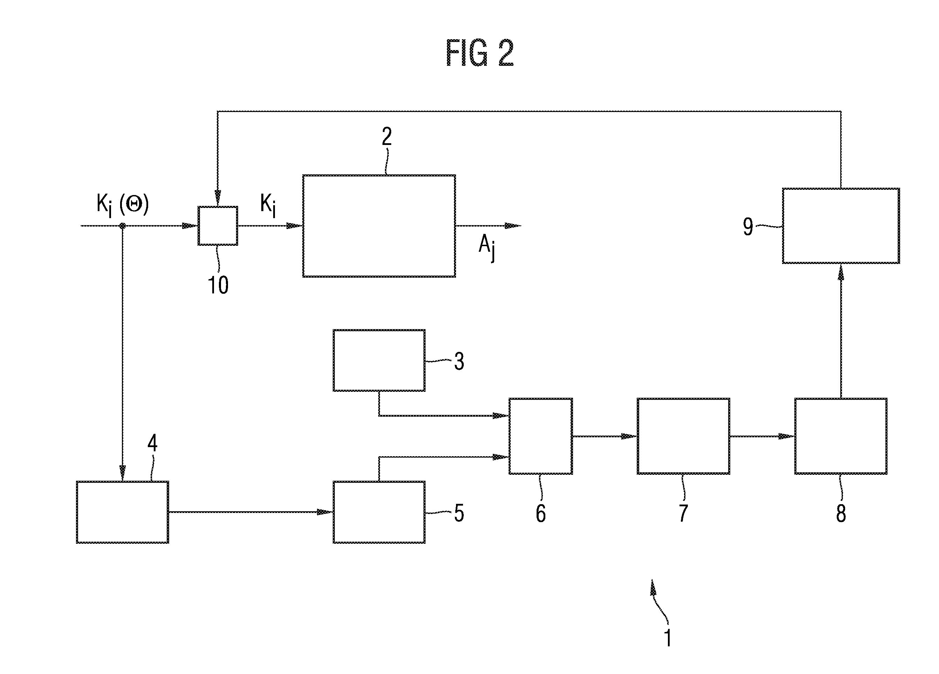

Wie man aus Figur 2 erkennen kann dient eine erfindungsgemäße Vorrichtung 1 zur Bereitstellung eines deterministischen Ziel-Differentialgleichungssystems mit dessen Hilfe eine Steuereinrichtung ein technisches System 2 beeinflusst bzw. steuert oder regelt.

Das technische System 2 kann mehrere Eingangsparameter $K_I$ und mehrere Ausgangsparameter $A_J$ aufweisen. Die Eingangsparameter $K_I$ sind stochastische Eingangsparameter die einer Streuung unterliegen.

Bei dem technischen System 2 handelt es sich beispielsweise um eine Anlage zur Vernichtung von Stickstoffmonoxid NO, wobei die Konzentration C des Stickstoffmonoxids NO in einer chemischen Reduktionsreaktion vermindert wird. Dabei hängt der Verlauf der chemischen Reaktion von der Temperatur T ab, bei der sie stattfindet. Bei diesem Ausführungsbeispiel stellt somit die Verbrennungs- bzw. Reaktionstemperatur T einen stochastischen Eingangsparameter K und die Konzentration $C_{NO}$ des abgegebenen Stickstoffmonoxids NO einen stochastischen Ausgangsparameter $A_J$ dar. Die in einem Ofen der Anlage 2 stattfindende chemische Reaktion lässt sich durch ein Ausgangs-Differentialgleichungssystem mit stochastischen Eingangsparametern K darstellen.

Ein weiteres Beispiel für ein technisches System 2 ist ein Mehrkörpersystem, wie beispielsweise ein Fahrzeug, ein Roboter oder ein Maschinenwerkzeug. Dieses Mehrkörpersystem setzt sich aus einer Vielzahl von mechanischen Bauelementen zusammen, die mit unterschiedlichen Hersteller- bzw. Herstellertoleranzen gefertigt sind.

Ferner kann es sich bei dem technischen System 2 um z.B. einen elektrischen Schaltkreis, beispielsweise einen Oszillatorschaltkreis, handeln Verhalten simuliert werden soll. Auch dieser Schaltkreis setzt sich aus Bauelementen mit streuenden Modellparametern zusammen, beispielsweise aus elektronischen Bauelementen mit unterschiedlichen Herstellungstoleranzen und unsicheren Messdaten bzw. Eingangssignalen, die stochastisch streuen.

Das technische System bzw. die technische Anlage 2 lassen sich in ihrem Verhalten durch ein Ausgangs-Differentialgleichungssystem beschreiben, welches eine oder mehrere Differentialgleichungen umfassen kann. Das Ausgangs-Differentialgleichungssystem kann Differentialgleichungen verschiedener Ordnung umfassen. Weiterhin kann es sich bei den Differentialgleichungen um gewöhnliche Differentialgleichungen aber auch um partielle Differentialgleichungen handeln. Das Ausgangs-Differentialgleichungssystem modelliert somit ein reales technisches System 2, beispielsweise einen chemischen Prozess und wird in einem Datenspeicher 3 abgelegt. Die verschiedenen stochastischen Eingangsparameter K des jeweiligen technischen Systems 2 weisen jeweils eine zugehörige Wahrscheinlichkeitsverteilung K ($\theta$) hinsichtlich einer stochastischen Zufallsgröße $\theta$ auf.

Bei der in Figur 2 dargestellten Ausführungsform wird die Wahrscheinlichkeitsverteilung des stochastischen Eingangsparameters K anhand von Messungen des stochastischen Eingangsparameters ermittelt. Hierzu weist die Vorrichtung 1 für den jeweiligen stochastischen Eingangsparameter K eine zugehörige Messeinrichtung 4 auf, die die Wahrscheinlichkeitsverteilung K ($\theta$) des stochastischen Eingangsparameters $K_i$ durch Messungen ermittelt. Die Wahrscheinlichkeitsverteilung der verschiedenen stochastischen Eingangsparameter K hinsichtlich der stochastischen Zufallsgröße $\theta$ kann unterschiedlich sein und beispielsweise eine Normalverteilung, eine Beta-Verteilung oder eine Gleichverteilung umfassen. In Abhängigkeit von der durch die Messeinrichtung 4 ermittelten Art der Wahrscheinlichkeitsverteilung des jeweiligen stochastischen Eingangsparameters K wird aus einem Basisfunktionsspeicher 5 eine zugehörige passende orthogonale Basisfunktion selektiert. Die orthogonale Basisfunktion wird somit in Abhängigkeit der ermittelten Wahrscheinlichkeitsdichteverteilung der Zufallsgröße vorzugsweise automatisch selektiert. Diese selektierte orthogonale Basisfunktion wird aus dem Basisfunktionsspeicher 5 ausgelesen.

Ist die ermittelte Wahrscheinlichkeitsverteilung der Zufallsgröße ($\theta$) des jeweiligen stochastischen Eingangsparameters K eine Normalverteilung wird als orthogonale Basisfunktion bei einer möglichen Ausführungsform der erfindungsgemäßen Vorrichtung eine sogenannte Hermite-Basisfunktion aus dem Speicher 5 ausgelesen.

Ist die ermittelte Wahrscheinlichkeitsverteilung der Zufallsgröße ($\theta$) eine Beta-Verteilung der Zufallsgröße wird bei einer möglichen Ausführungsform eine Jacobi-Basisfunktion als orthogonale Basisfunktion selektiert bzw. bereitgestellt.

Ist die ermittelte Wahrscheinlichkeitsverteilung der Zufallsgröße ($\theta$) eine Gleichverteilung wird eine Legendre-Basisfunktion als orthogonale Basisfunktion bereitgestellt und aus dem Speicher 5 ausgelesen.

Bei der erfindungsgemäßen Vorrichtung 1 wird eine gewichtete Summe von orthogonalen Basisfunktionen $\psi$ ($\theta$) in das aus dem Speicher 3 ausgelesene Ausgangs-Differentialgleichungssystem eingesetzt. Dieses Einsetzen erfolgt automatisch durch eine Berechnungseinheit 6. Weiterhin multipliziert die Berechnungseinheit 6 das ausgelesene Ausgangs-Differentialgleichungssystem mit den bereitgestellten orthogonalen Basisfunktionen, die aus dem Basisfunktionsspeicher 5 ausgelesen werden. Eine der Berechnungseinheit 6 nachgeschaltete Integrationseinrichtung 7 integriert das mit den orthogonalen Basisfunktionen multiplizierte Ausgangs-Differentialgleichungssystem zur Generierung des deterministischen Ziel-Differentialgleichungssystems, das in einem Speicher 8 zwischengespeichert wird. Eine Steuereinrichtung 9 hat Zugriff auf den Zwischenspeicher 8 und berechnet stochastische Ausgangsparameter $A_J$ des technischen Systems 2 auf Grundlage des generierten deterministischen Ziel-Differentialgleichungssystems. Dabei werden die berechneten stochastischen Ausgangsparameter durch die Steuereinrichtung 9 jeweils zur Ermittlung eines zugehörigen Erwartungswertes $\mu$ des Ausgangsparameters $A_J$ ausgewertet, wobei der Ausgangsparameter hinsichtlich der stochastischen Eingangsparameter $K_i$ deterministisch optimiert wird. Die Steuereinrichtung 9 steuert über eine Steuerleitung ein Einstellglied 10 entsprechend dem optimierten Wert des jeweiligen Eingangsparameters. Bei dem Einstellglied 10 handelt es sich beispielsweise um ein mechanisches oder elektronisches Einstellglied. Bei dem mechanischen Einstellglied handelt es sich beispielsweise um ein Ventil. Das elektronische Einstellglied 10 ist beispielsweise ein ansteuerbarer Schalter, z.B. ein Relais oder ein Transistor.

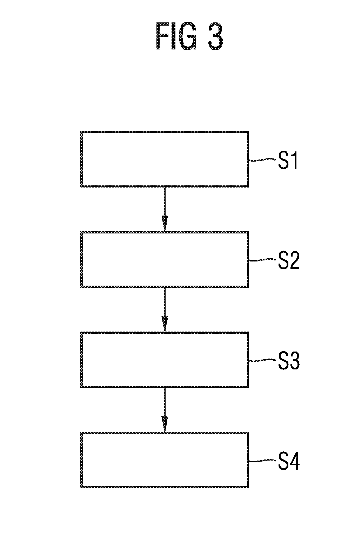

Figur 3 zeigt ein einfaches Ablaufdiagramm zur Darstellung eines Ausführungsbeispiels des erfindungsgemäßen Verfahrens.

In einem Schritt S1 wird zunächst eine gewichtete Summe von orthogonalen Basisfunktionen $\psi(\theta)$ durch Auslesen des Basisfunktionsspeichers 5 bereitgestellt, wobei die Berechnungseinheit 6 die bereitgestellte gewichtete Summe von orthogonalen Basisfunktionen automatisch in das Ausgangs-Differentialgleichungssystem sendet, welches aus dem Datenspeicher 3 ausgelesen wird.

Anschließend wird das Ausgangs-Differentialgleichungssystem in einem Schritt S2 mit den bereitgestellten orthogonalen Basisfunktionen ψ (θ) multipliziert.

In einem weiteren Schritt S3 wird das mit den orthogonalen Basisfunktionen multiplizierte Ausgangs-Differentialgleichungssystem zur Generierung in ein deterministisches Ziel-Differentialgleichungssystem integriert. Dies erfolgt beispielsweise durch die Integrationseinrichtung 7 in Echtzeit.

Weiterhin wird in einem Schritt S4 eine Berechnung von stochastischen Ausgangsparametern auf Grundlage des generierten deterministischen Ziel-Differentialgleichungssystems durchgeführt. Das generierte deterministische Ziel-Differentialgleichungssystem wird von der Integrationseinrichtung 7 in den Zwischenspeicher 8 abgelegt. Die Berechnung der stochastischen Ausführungsparameter auf Grundlage des zwischengespeicherten deterministischen Ziel-Differentialgleichungssystems erfolgt beispielsweise durch die Steuereinrichtung 9. Die stochastischen Ausgangsparameter werden vorzugsweise zur Ermittlung eines Erwartungswertes p, einer Varianz σ und einer Verteilungsdichte p des jeweiligen stochastischen Ausgangsparameters ausgewertet.

Bei einer möglichen Ausführungsform des erfindungsgemäßen Verfahrens wird der ermittelte Erwartungswert μ des jeweiligen stochastischen Ausgangsparameters $A_J$ in einem weiteren Schritt hinsichtlich der stochastischen Eingangsparameter K deterministisch optimiert. Anschließend wird der jeweilige Eingangsparameter entsprechend der zu dem optimalen Ausgangsparameter zugehörigen Eingansparameterwerte automatisch durch die Steuereinrichtung 9 eingestellt. Bei einer möglichen Ausführungsform des erfindungsgemäßen Verfahrens weisen die stochastischen Eingangsparameter K jeweils eine zugehörige Wahrscheinlichkeitsverteilung K (θ) hinsichtlich einer stochastischen Zufallsgröße (θ) auf, wobei die Wahrscheinlichkeitsverteilung der stochastischen Eingangsparameter K jeweils anhand von Messungen des jeweiligen stochastischen Eingangsparameters, beispielsweise mittels einer Messeinrichtung 4, ermittelt wird. In Abhängigkeit von der ermittelten Wahrscheinlichkeitsdichteverteilung K(θ) wird die orthogonale Basisfunktion selektiert und aus dem Basisfunktionsspeicher 5 ausgelesen und der Berechnungseinheit 6 zur Verfügung bzw. bereitgestellt.

Die Vorgehensweise des erfindungsgemäßen Verfahrens zum automatischen Generieren eines deterministischen Ziel-Differentialgleichungssystems lässt sich anhand eines einfachen Beispiels wie folgt darstellen. Bei dem einfachen Beispiel wird das technische System 2 durch eine Differentialgleichung beschrieben:

$$\underline{\dot{u}}(t) = f(u(t), K), u(0) = U_0, K \in N(\mu, \sigma) \tag{1}$$

wobei K ein stochastischer Eingangsparameter mit einer bestimmten Wahrscheinlichkeitsverteilung in Abhängigkeit von einer Zufallsgröße θ ist. Der stochastische Eingangsparameter lässt sich als Verteilung mit einem Erwartungswert μ und einer Varianz σ darstellen.

$$K = \mu + \sigma\theta \tag{2}$$

Die Größe u lässt sich als PC-Reihe (PC: Polynomial Chaos) wie folgt entwickeln:

$$u(t, \theta) = \sum_{i=0}^{n} u_i(t) \Psi_i(\theta) \tag{3}$$

wobei n die Reihenlänge darstellt.

Die entwickelte Reihe wird in die Gleichung (1) eingesetzt:

$$\sum_{i=0}^{n} \dot{u}_j(t) \Psi_i(\theta) = f\left( \sum_{j=0}^{n} u_j(t) \Psi_j(\theta), \mu + \sigma\theta \right) \tag{4}$$

Durch Multiplikation dieses Ausgangs-Differentialgleichungssystems mit der bereitgestellten orthogonalen Basisfunktion ψ (θ) und einer Integration über die Zufallsgröße θ innerhalb von Wahrscheinlichkeitsgrenzen der Wahrscheinlichkeitsverteilung ergibt sich ein deterministisches Ziel-Differentialgleichungssystem wie folgt:

$$u_k{}^{\circ}(t) = \int f\left(\sum_{i=0}^{n} u_j(t)\Psi_j(\theta), u + \sigma\theta\right)\Psi_K(\theta)d\theta \qquad (5)$$

wobei k=0,1,2,..,n,
ψ (θ) eine orthogonale Basisfunktion und
K ein um einen Mittelwert bzw. Erwartungswert μ mit einer Standardabweichung σ streuender stochastischer Eingangsparameter ist.

Bei der orthogonalen Basisfunktion ψ kann es sich beispielsweise um Hermite-Basisfunktionen, Jacobi-Basisfunktionen oder um Legendre-Basisfunktionen handeln. Diese Basisfunktionen werden in Abhängigkeit einer ermittelten Wahrscheinlichkeitsverteilung der Zufallsgröße θ vorzugsweise automatisch selektiert. Die Basisfunktionen sind orthogonal bezüglich der Dichte der festgestellten bzw. ermittelten Wahrscheinlichkeitsverteilung.

Das Ausgangs-Differentialgleichungssystem des technischen Systems 2 kann eine Vielzahl von verschiedenen Differentialgleichungen DGL umfassen. Bei einem einfachen Ausführungsbeispiel lässt sich das technische System 2 beispielsweise durch zwei Differentialgleichungen wie folgt beschreiben:

$$x^{\circ}(t) = ax(t) - bx(t)y(t) \qquad (6)$$

$$y^{\circ}(t) = bx(t)y(t) - cy(t) \qquad (7)$$

wobei die Parameter a, b, c stochastische Eingangsparameter K sein können.

Das technische System 2 weist mehrere Eingangsparameter K auf wobei mehrere Eingangsparameter K einen Eingangsparametervektor bilden. Weiterhin kann ein sogenannter dualer Maskenvektor DMV abgeleitet werden. Ist bei dem oben dargestellten einfachen Beispiel der Eingangsparameter a und der dritte Eingangsparameter c vorgegeben bzw. nicht stochastisch und der zweite Eingangsparameter b ein stochastischer Eingangsparameter lautet ein dualer Maskenvektor bzw. eine duale Maskenvektor-Martrix DMV:

$$DMV = \begin{pmatrix} a\ o \\ \mu\ \sigma \\ c\ o \end{pmatrix}$$

$$(8)$$

Die Berechnungseinheit 6 berechnet daraus automatisch ein deterministisches Ziel-Differentialgleichungssystem wie folgt:

$$x_k^{\bullet}(t) = \langle ax(t) - (\mu + \theta\sigma)x(t)y(t), \Psi_k(\theta)\rangle, k = 0,1,...,n \qquad (9)$$

$$y_k^\bullet(t) = \langle (\mu + \theta\sigma)x(t)y(t) - cy(t), \Psi_k(\theta) \rangle, k = 0,1,..,n \tag{10}$$

$$\langle f(\theta), g(\theta) \rangle = \int_R f(\theta)g(\theta)e^{\frac{-\theta^2}{2}}d\theta \tag{11}$$

Diesen Vorgang wird auch als Projektion bezeichnet.

Sind bei dem dargestellten einfachen Ausgangs-Differentialgleichungssystem die ersten beiden Eingangsparameter a, b stochastische Größen und der dritte Eingangsparameter c ein deterministischer Wert ergibt sich beispielsweise ein dualer Maskenvektor DMV wie folgt:

$$DMV = \begin{pmatrix} \mu_1 & \sigma_1 \\ \mu_2 & \sigma_2 \\ c & o \end{pmatrix} \tag{12}$$

Die Berechnungseinheit 6 generiert daraus automatisch folgendes deterministisches Ziel-Differentialgleichungssystem:

$$x_k^\bullet(t) = \langle (\mu_1 + \theta_1\sigma_1)x(t) - (\mu_2 + \theta_2\sigma_2)x(t)y(t), \Psi_k(\theta_1, \theta_2) \rangle, k = 0,1,...,n \tag{13}$$

$$y_k^\bullet(t) = \langle (\mu_2 + \theta_2\sigma_2)x(t)y(t) - cy(t), \Psi_k(\theta_1, \theta_2) \rangle, k = 0,1,...n \tag{14}$$

$$\langle f(\theta_1, \theta_2), g(\theta_1, \theta_2) \rangle = \int_{R^2} f(\theta_1, \theta_2)g(\theta_1, \theta_2)e^{\frac{-(\theta_1^2 + \theta_2^2)}{2}}d\theta_1 d\theta_2 \tag{15}$$

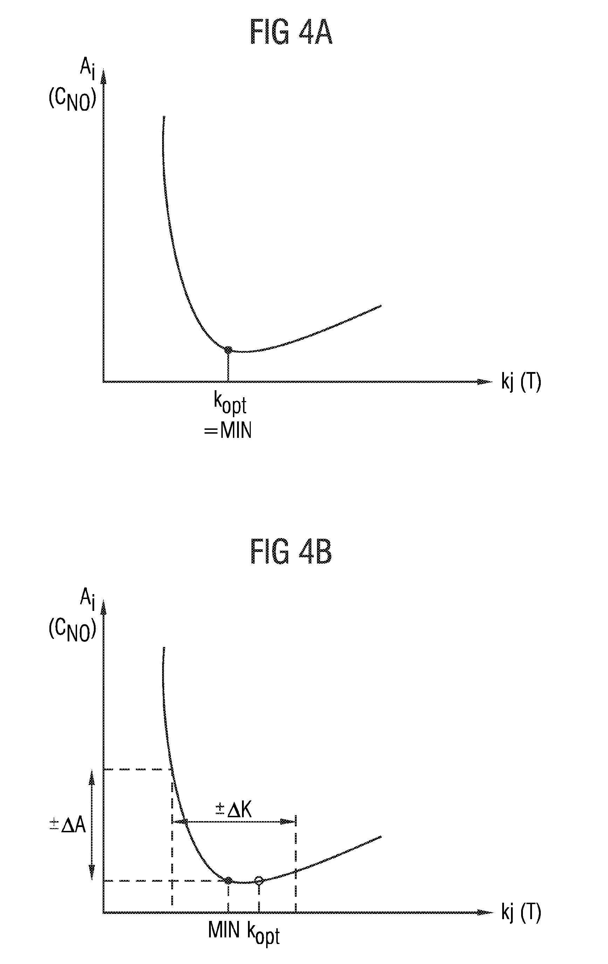

Figuren 4A, 4B dienen der Verdeutlichung der erfindungsgemäßen Steuerung bzw. Regelung mit Hilfe des generierten deterministischen Ziel-Differentialgleichungssystems. Bei dem technischen System 2 kann es sich beispielsweise um eine Anlage zur Verarbeitung chemischer Stoffe handeln, beispielsweise um einen Brennofen zur Reduzierung einer Stickstoff-Monoxid-Konzentration $C_{NO}$ eines Abgases. Durch selektive nicht-catalytische Reduktion SNCR (Selective Non-Catalytic Reduction) ist es möglich einen Anteil von Stickstoffoxidemissionen zu reduzieren. Die entsprechende chemische Reduktion lässt sich wie folgt beschreiben:

$$4NO + 4NH_3 + O_2 \rightarrow 4N_2 + 6H_2O \qquad\qquad (16)$$

Die chemische Reaktion involviert NH2-Radikale, die sich an das Stickstoff-Monoxid NO anbinden und dann zerfallen.

Bei zu niedrigen Temperaturen ist die Reaktionsrate zu niedrig und es findet keine Verminderung der Stickstoff-MonoxidKonzentration statt. Ist umgekehrt die Reaktionstemperatur zu hoch, zerfällt das Ammoniak NH3 wie folgt:

$$4NH_3 + 5O_2 \rightarrow 4NO + 6H_2O \qquad\qquad (17)$$

Das bedeutet, dass bei einer zu hohen Temperatur T die Konzentration C des Stickstoff-Monoxids NO nicht gesenkt wird, sondern im Gegenteil sogar Stickstoff-Monoxid NO gebildet wird. Der dargestellte chemische Prozess zur Verminderung von Stickstoff-Monoxid NO ist daher auf ein enges Temperaturfenster beschränkt, in dem der Prozess effizient ablaufen kann. Die Temperatur T der Umgebung, in welcher der Verbrennungsprozess stattfindet bildet eine stochastische Eingangsgröße, wobei die Temperatur T um einen Erwartungswert herum schwanken kann.

Figuren 4A, 4B zeigen beispielhaft eine Kennlinie, wobei als Ausgangsgröße bzw. ein Ausgangsparameter $A_J$ des Verbrennungsofens die Konzentration $C_{NO}$ des gebildeten Stickstoff-Monoxids NO in Abhängigkeit von der Umgebungstemperatur T dargestellt ist.

Bei einer herkömmlichen Steuerung bzw. Regelung wird die Eingangsgröße bzw. der Eingangsparameter in dem dargestellten Beispiel, wie in Figur 4A gezeigt, entsprechend einem Optimalwert eingestellt. Im dargestellten Beispiel wird der Optimalwert durch das Minimum der dargestellten Kurve gebildet, nämlich derjenigen Temperatur bei der die Konzentration C des gebildeten Stickstoff-Monoxids NO minimal ist. Tatsächlich handelt es sich bei der Ofentemperatur T jedoch um eine stochastische Eingangsgröße die um einen Erwartungswert schwankt bzw. variiert. Wird daher, wie in Figur 4a dargestellt, ein Einstellglied für die stochastische Eingangsgröße T in herkömmlicher Weise auf den Minimalwert der dargestellten Kurve eingestellt, kann es aufgrund der Schwankungen der stochastischen Eingangsgröße K und des steilen Verlaufs der Kennlinie unterhalb des Minimums zu sehr hohen Schwankungen bei der Ausgangsgröße $A_I$, nämlich der Kohlenmonoxidkonzentration $C_{NO}$ kommen, wie man aus Figur 4A erkennen kann.

Daher kann unter Berücksichtigung der stochastischen Streuungen bzw. Schwankungen der tatsächlich beste Werte zur Einstellung des stochastischen Eingangsparameters $K_J$ bzw. T oberhalb des lokalen Minimums der Kennlinie liegen, wie in Figur 4B dargestellt.

Die erfindungsgemäße Steuerung und Regelung stellt daher in dem dargestellten Beispiel den stochastischen Eingangsparameter $K_J$ bzw. die Temperatur des Ofens nicht auf den lokalen Minimalwert der Kurve ein, sondern etwas oberhalb des Minimalwerts, so dass es im zeitlichen Mittel zu einer Minimierung der Stickstoff-Monoxidkonzentration $C_{NO}$ kommt. Nach Spezifikation von deterministischen bzw. stochastischen Eingangsparametern K durch einen Dualmaskvektor DMV und der deterministischen Gleichungen wird automatisch ein deterministisches Ziel-Differentialgleichungssystem generiert und anschließend mit einem numerischen Integrationsverfahren vorzugsweise in Echtzeit ausgerechnet bzw. gelöst.

**Patentansprüche**

1. Verfahren zum automatischen Generieren eines deterministischen Ziel-Differentialgleichungssystems zur Auswertung eines Ausgangs-Differentialgleichungssystems (RDE) mit stochastischen Eingangsparametern (K) mit den folgenden Schritten:

   a) Bereitstellen (S1) einer gewichteten Summe von orthogonalen Basisfunktionen $\psi(\theta)$, die in das Ausgangs-Differentialgleichungssystem eingesetzt werden, wobei $(\theta)$ eine stochastische Zufallsgröße bildet;
   b) Multiplizieren (S2) des Ausgangs-Differentialgleichungssystems mit den bereitgestellten orthogonalen Basisfunktionen $\psi(\theta)$;
   c) Integrieren (S3) des mit den orthogonalen Basisfunktionen $\psi(\theta)$ multiplizierten Ausgangs-Differentialgleichungssystem zur Generierung des deterministischen Ziel-Differentialgleichungssystems; und
   d) Berechnen (S4) von stochastischen Ausgangsparametern auf Grundlage des generierten deterministischen Ziel-Differentialgleichungssystems.

2. Verfahren nach Anspruch 1,
wobei die berechneten stochastischen Ausgangsparameter jeweils zur Ermittlung eines Erwartungswertes ($\mu$), einer Varianz ($\sigma$) und einer Verteilungsdichte (p) des jeweiligen stochastischen Ausgangsparameters ausgewertet werden.

3. Verfahren nach Anspruch 2,
wobei der ermittelte Erwartungswert ($\mu$) des jeweiligen stochastischen Ausgangsparameters hinsichtlich der stochastischen Eingangsparameter deterministisch optimiert wird und die Eingangsparameter (k) entsprechend der zu dem optimalen Ausgangsparameter zugehörigen Eingangsparameterwerten automatisch eingestellt werden.

4. Verfahren nach Anspruch 1 bis 3,
wobei das Ausgangs-Differentialgleichungssystem aus einem Speicher (3) ausgelesen wird und mehrere Differentialgleichungen umfasst, die gewöhnliche Differentialgleichungen und partielle Differentialgleichungen aufweisen.

5. Verfahren nach Anspruch 1 bis 4,
wobei die stochastischen Eingangsparameter (K) jeweils eine zugehörige Wahrscheinlichkeitsverteilung K($\theta$) hinsichtlich der stochastischen Zufallsgröße ($\theta$) aufweisen.

6. Verfahren nach Anspruch 1 bis 5,
wobei die Wahrscheinlichkeitsverteilung K($\theta$) eines stochastischen Eingangsparameters (K) anhand von Messungen des stochastischen Eingangsparameters durch eine Messeinrichtung (4) ermittelt wird.

7. Verfahren nach Anspruch 1 bis 6,
wobei die orthogonalen Basisfunktionen $\psi(\theta)$ bezüglich der Verteilung der Zufallsgröße ($\theta$) orthogonal sind.

8. Verfahren nach Anspruch 7,
wobei die Wahrscheinlichkeitsverteilung der Zufallsgröße ($\theta$) durch eine Normalverteilung, eine Betaverteilung oder eine Gleichverteilung gebildet wird.

9. Verfahren nach Anspruch 8,
wobei bei einer Normalverteilung der Zufallsgröße ($\theta$) eine Hermite-Basisfunktion als orthogonale Basisfunktion bereitgestellt wird.

10. Verfahren nach Anspruch 8,
wobei bei einer Betaverteilung der Zufallsgröße ($\theta$) eine Jacobi-Basisfunktion als orthogonale Basisfunktion bereitgestellt wird.

11. Verfahren nach Anspruch 8,
wobei bei einer Gleichverteilung der Zufallsgröße ($\theta$) eine Legendre-Basisfunktion als orthogonale Basisfunktion bereitgestellt wird.

12. Verfahren nach Anspruch 7 bis 11,
wobei die orthogonale Basisfunktion in Abhängigkeit der ermittelten Wahrscheinlichkeitsdichteverteilung der Zufallsgröße ($\theta$) selektiert wird.

13. Verfahren nach Anspruch 12,
wobei die selektierte orthogonale Basisfunktion aus einem Basisfunktionsspeicher (5) ausgelesen wird.

14. Vorrichtung zum automatischen Generieren eines deterministischen Ziel-Differentialgleichungssystems zur Auswertung eines Ausgangs-Differentialgleichungssystems (RDE) mit stochastischen Eingangsparametern (K) mit:

a) einer Einrichtung (3, 5) zum Bereitstellen einer gewichteten Summe von orthogonalen Basisfunktionen $\Psi$ ($\theta$), die in das Ausgangs-Differentialgleichungssystem eingesetzt wird, wobei ($\theta$) eine stochastische Zufallsgröße bildet,
b) einer Multiplikationseinrichtung (6) zum Multiplizieren des Ausgangs-Differentialgleichungssystems mit den bereitgestellten orthogonalen Basisfunktionen
c) eine Integrationseinrichtung (7) zum Integrieren des mit den orthogonalen Basisfunktionen $\Psi$ ($\theta$) multiplizierten

Ausgangs-Differentialgleichungssystems zur Generierung des deterministischen Ziel-Differentialgleichungssystems; und mit

d) einer Steuereinrichtung (9), welche stochastische Ausgangsparameter auf Grundlage des generierten deterministischen Ziel-Differentialgleichungssystems berechnet.

15. Robuste Regelungs- oder Steuerungsschaltung (1) mit einer Vorrichtung nach Anspruch 14, wobei die berechneten stochastischen Ausgangsparameter durch die Steuereinrichtung (9) jeweils zur Ermittlung eines zugehörigen Erwartungswertes ($\mu$) des Ausgangsparameters ausgewertet werden, welcher hinsichtlich der stochastischen Eingangsparameter (K) deterministisch optimiert wird, wobei mindestens ein Einstellglied (10) entsprechend des optimierten Wertes des jeweiligen Eingangsparameters (K) durch die Steuereinrichtung (9) angesteuert wird.

FIG 1

$K_1$

$K_2$

$\vdots$

$K_N$

DGL

$A_1$

$A_2$

$\vdots$

$A_M$

FIG 2

EP 2 395 436 A1

# FIG 3

## FIG 4A

$A_i$
$(C_{NO})$

$k_{opt}$
$=MIN$

$kj\ (T)$

## FIG 4B

$A_i$
$(C_{NO})$

$\pm\Delta K$

$\pm\Delta A$

$MIN\ k_{opt}$

$kj\ (T)$

| | Europäisches Patentamt |
|---|---|
| | European Patent Office |
| | Office européen des brevets |

**EUROPÄISCHER RECHERCHENBERICHT**

Nummer der Anmeldung

EP 10 00 6029

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | AUGUSTIN F ET AL: "Polynomial chaos for the approximation of uncertainties: Chances and limits", EUROPEAN JOURNAL OF APPLIED MATHEMATICS, CAMBRIDGE UNIVERSITY PRESS, CAMBRIDGE, GB, Bd. 19, Nr. 2, 1. April 2008 (2008-04-01), Seiten 149-190, XP008125406, ISSN: 0956-7925, DOI: DOI:10.1017/S0956792508007328 [gefunden am 2008-03-19] * sections 2.2, 3.3, 4.1 * ----- | 1-15 | INV. G06F17/13 |
| | | | RECHERCHIERTE SACHGEBIETE (IPC) |
| | | | G06F |

Der vorliegende Recherchenbericht wurde für alle Patentansprüche erstellt

| Recherchenort | Abschlußdatum der Recherche | Prüfer |
|---|---|---|
| Berlin | 17. März 2011 | Virnik, Elena |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)